# EUROPEAN PATENT APPLICATION

(11) **EP 2 327 898 A1**
(43) Date of publication of application: **01.06.2011**
(21) Application number: 09809472.5
(22) Date of filing: 28.07.2009
(51) Int. Cl.: F16D 3/18, B63H 23/04

(54) **FLEXIBLE COUPLING STRUCTURE AND SHIP THRUSTER DEVICE WITH SAME**

(30) Priority: 01.09.2008 JP 2008224062
(71) Applicant: Kawasaki Jukogyo Kabushiki Kaisha, Kobe-shi, Hyogo 650-8670 (JP)
(72) Inventor: HINO, Michinobu, Kobe-shi Hyogo 650-8670 (JP)
(74) Representative: Leinweber & Zimmermann
(86) International application number: PCT/JP2009/003549
(87) International publication number: WO 2010/023815

(57) **Abstract**

The present invention provides a self load supporting type flexible coupling structure, that is, a self-contained type flexible coupling structure configured such that a vibration problem does not occur in the flexible coupling structure which is large in total length.

The present invention is configured such that: a radial spherical bearing portion (23) and a thrust spherical bearing portion (48) are incorporated in a gear coupling structure such that rotational center positions of the radial spherical bearing portion (23) and thrust spherical bearing portion (48) coincide with a crowning center position (O) of an outer gear (39); an inner gear (38) is supported by the radial spherical bearing portion (23) and the thrust spherical bearing portion (48); and the outer gear (39) is able to incline relatively with respect to the inner gear (38) based on the crowning center position (O).

## Description

### Technical Field

The present invention relates to a flexible coupling structure capable of coupling a driving shaft to a driven shaft and transmitting the rotation and power of the driving shaft to the driven shaft, and a marine thruster device including the flexible coupling structure.

### Background Art

When transmitting the power of a driving power unit to a driven machine, a flexible coupling is generally incorporated between the driving power unit and the driven machine to absorb a central axis deviation generated at the time of installation. Therefore, it is unnecessary to pay attention to the accuracy of installation of the power unit and the driven machine, and an installation operation can be finished in a short period of time.

Even if an installed standard base (hull) in typically a ship slightly changes by, for example, deformation, and the central axes of both machines slightly change, this can be overcome as long as the flexible coupling is incorporated therein. As above, since various merits can be obtained, the flexible coupling is widely used. Various flexible couplings, such as a gear flexible coupling (commonly known as a "gear coupling"), a plate spring flexible coupling utilizing a metal plate, and a rubber flexible coupling, have been put into practical use.

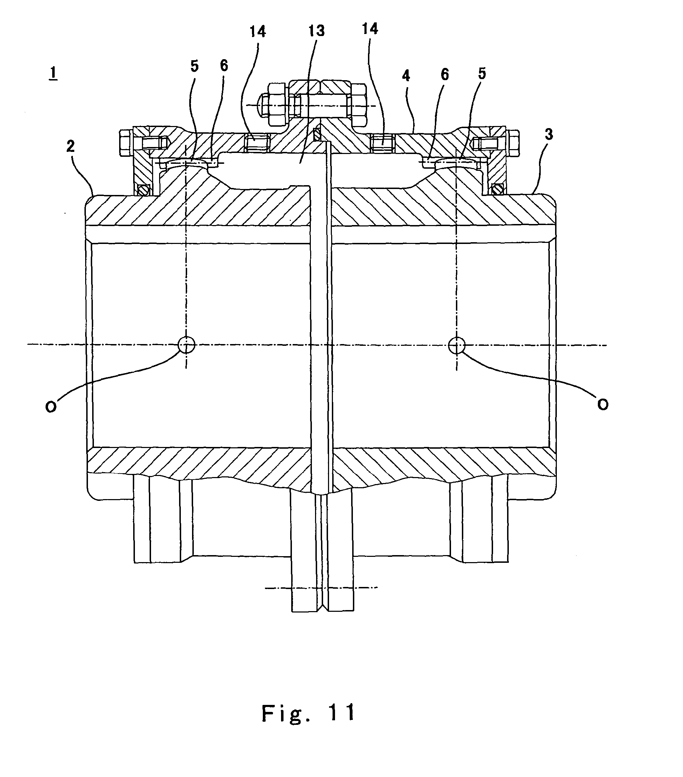

Referring to Fig. 11, a gear coupling 1 that is a typical coupling will be described herein. The gear coupling 1 has a simple structure constituted by (1) a power unit side inner tube 2, (2) a driven machine side inner tube 3, and (3) an intermediate portion outer tube 4, and has strength reliability. The gear coupling 1 is adopted in many land machines and ship machines. An outer gear 5 is formed on an outer peripheral surface of the power unit side inner tube 2, and an inner gear 6 is formed on an inner peripheral surface of the outer tube 4. Torque transmission is carried out by engagement of the gears 5 and 6. Since tooth tips and tooth surfaces of the outer gear 5 are subjected to crowning, the outer gear 5 can incline with respect to the inner gear 6 based on a crowning center O.

Similarly, the outer gear 5 is formed on an outer peripheral surface of the driven machine side inner tube 3, and the inner gear 6 is formed on the inner peripheral surface of the outer tube 4. Torque transmission is carried out by the engagement of the gears 5 and 6. Since the tooth tips and tooth surfaces of the outer gear 5 are subjected to the crowning, the outer gear 5 can be inclined with respect to the inner gear 6 based on the crowning center O.

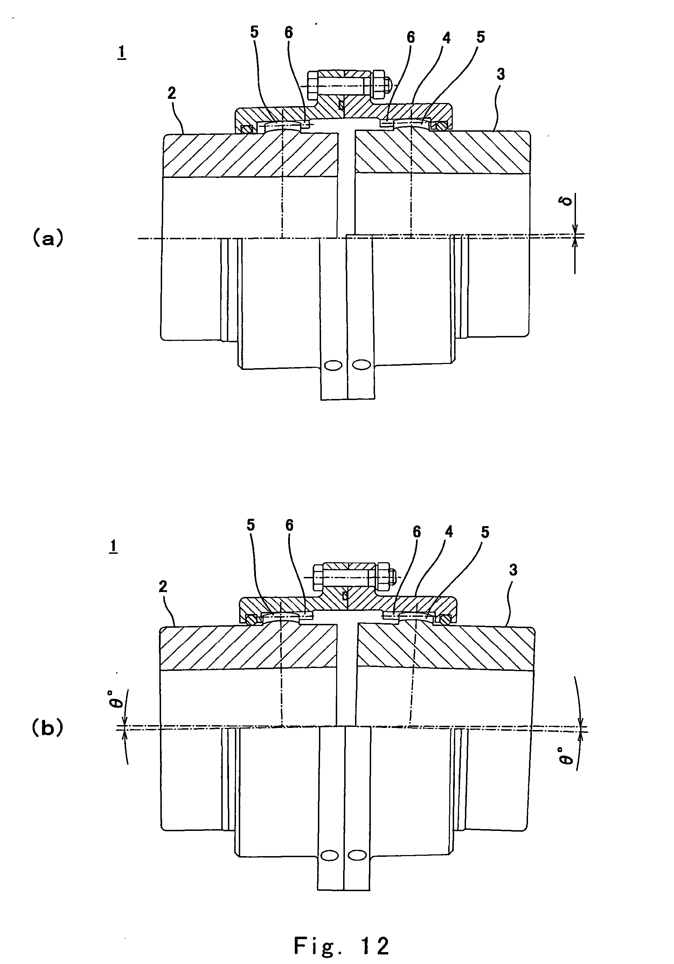

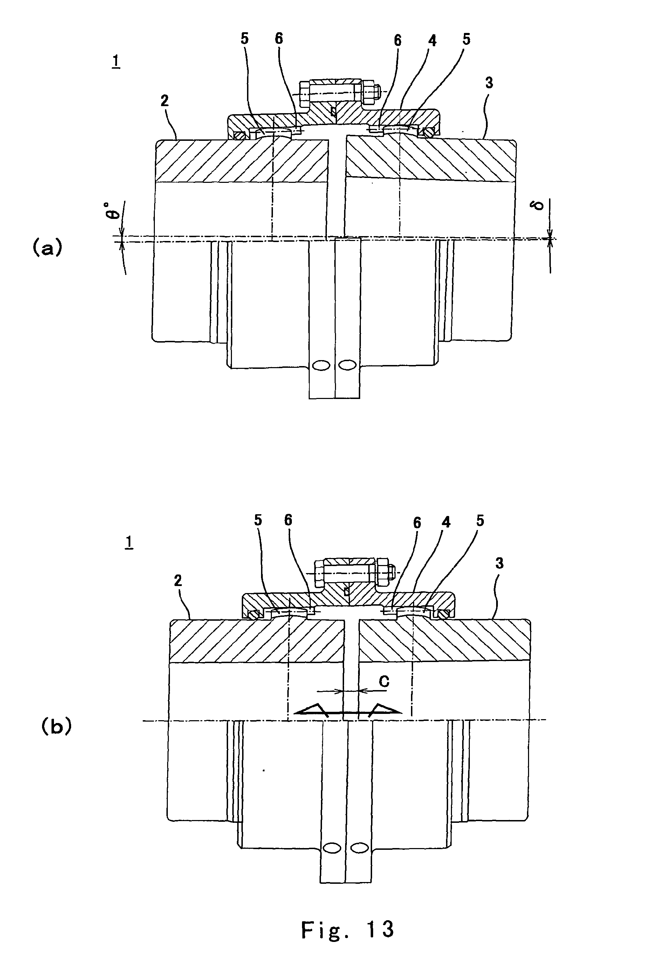

By this inclination, (1) a radial displacement δ (see Fig. 12(a)) between both axes (inner tubes 2 and 3) can be realized. To be specific, even if the driving central axis and the driven central axis are parallel to each other but are not on the same straight line and a parallel displacement amount δ exists, these are acceptable. Moreover, (2) a displacement of an angle θ (see Fig. 12(b)) can be realized. To be specific, even if the driving central axis and the driven central axis intersect with each other and are not on the same straight line and an angular displacement amount θ exists, these are acceptable. Further, (3) a combination of these displacements (see Fig. 13(a)) can be realized. To be specific, the driving central axis and the driven central axis do not intersect with each other and are not parallel to each other. Furthermore, (4) axial displacements (see Fig. 13(b)) of the inner tubes 2 and 3 can be realized. To be specific, the driving central axis and the driven central axis are on the same straight line, and an axial distance C changes.

Therefore, the gear coupling 1 can carry out smooth and secure power transmission while following four types of relative displacements between both axes (inner tubes 2 and 3). Here, depending on the type of the gear coupling, the configuration may be reversed, that is, the inner gear may be formed on the inner tube and the outer gear may be formed on the outer tube.

Moreover, as shown in Fig. 11, lubricating oil for the gears 5 and 6 is supplied through a fill plug 14, and a gear portion carry out torque transmission in an oil chamber 13 filled with the oil.

If an installation distance between the power unit and the driven machine is long, the intermediate portion outer tube 4 becomes long. In a case where the outer tube 4 is short, problems are less likely to occur even if the accuracy of the rotational balance of the outer tube 4 is low, that is, unbalance of the outer tube 4 is significant.

However, since the weight of the outer tube 4 increases as the length thereof increases, the degree of the unbalance of the outer tube 4 also increases. Therefore, an unbalance force increases, and lateral vibrations occur by an unbalance moment during the rotation of the outer tube 4. Especially, vibration problems rarely occur in a machine of low-speed rotation, such as several tens of rotations (rpm). However, influences of the vibrations become significant in a machine of medium-speed rotation, such as several hundreds of rotations or more or in a machine of high-speed rotation, such as more than the above rotations. This is because the unbalance force increases in accordance with square of the number of rotations.

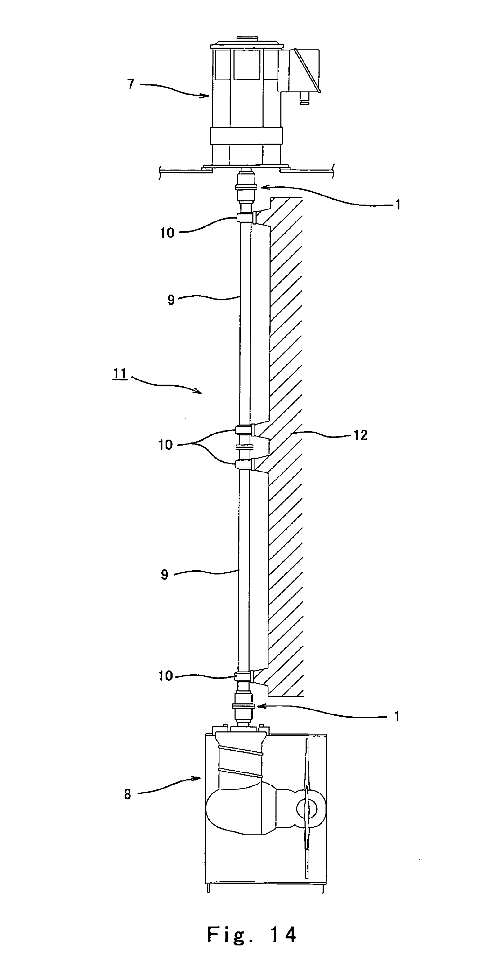

Therefore, in conventional cases, when the axis is long, the flexible coupling (gear coupling) 1 in which the outer tube 4 is extended cannot be adopted, and as shown in Fig. 14, a pair of flexible couplings 1 are respectively attached to a side where a power unit 7 is provided and a side where a driven machine (such as a marine thruster) 8 is provided, intermediate shafts 9 are attached between the flexible couplings 1, and an appropriate number of intermediate bearings 10 are provided for the intermediate shafts 9.

One example of a shaft coupling device including such gear coupling is described in Japanese Laid-Open Patent Application Publication No. 2002-54651 (see PTL 1, for example).

### Citation List

### Patent Literature

PTL 1: Japanese Laid-Open Patent Application Publication No. 2002-54651

### Summary of Invention

### Technical Problem

However, in the case of a conventional flexible coupling device 11 having a vertical axis shown in Fig. 14, a vertical wall portion 12 needs to be formed to fix the intermediate bearings 10. This requires great cost, process, and time, such as manufacturing cost, construction cost, and installation work, and there is a strong demand for the improvement of these.

The present invention was made to solve the above problems, and an object of the present invention is to provide a flexible coupling structure which does not cause vibration problems even in a flexible coupling which is large in total length and a marine thruster device including the flexible coupling structure.

### Solution to Problem

A flexible coupling structure according to the present invention includes a gear coupling structure, wherein: a radial spherical bearing portion is incorporated in the gear coupling structure such that a rotational center position of the radial spherical bearing portion coincides with a crowning center position of an outer gear; an inner gear or the outer gear is supported by the radial spherical bearing portion; and the outer gear is able to incline relatively with respect to the inner gear based on the crowning center position.

In accordance with the flexible coupling structure of the present invention, even if the unbalance force by the unbalance is generated with respect to the flexible coupling structure, this load can be supported by the radial spherical bearing portion. Therefore, a lateral vibration load during rotation can be supported, and lateral vibrations do not occur. Moreover, since the center of the radial spherical bearing portion coincides with the crowning center of the tooth tip of the outer gear, the flexible coupling structure can freely perform slight relative movements and rotational movements while receiving the unbalance force.

In the flexible coupling structure according to the present invention, a thrust spherical bearing portion may be further incorporated in the gear coupling structure such that a rotational center position of the thrust spherical bearing portion coincide with the crowning center position of the outer gear, and the inner gear or the outer gear may be supported by the radial spherical bearing portion and the thrust spherical bearing portion.

With this, since the center of the thrust spherical bearing portion coincide with the crowning center of the tooth tip of the outer gear, the flexible coupling structure can freely perform slight relative movements and rotational movements while receiving the unbalance force. Then, the weight of the flexible coupling structure can be received by the thrust spherical bearing portion.

In the flexible coupling structure according to the present invention, the gear coupling structure may be a vertical axis type and include a driving tubular portion to which a driving shaft is coupled, a driven tubular portion to which a driven shaft is coupled, and a connecting shaft configured to transmit rotation of the driving tubular portion coupled to the driving shaft to the driven tubular portion coupled to the driven shaft, and the thrust spherical bearing portion may be incorporated in the driving tubular portion located on an upper side or the driven tubular portion located on a lower side.

For example, the driving portion is coupled to the driving tubular portion located on the upper side, the driven portion is coupled to the driven tubular portion located on the lower side, and the thrust spherical bearing portion is incorporated in the driven tubular portion located on the lower side. In this case, in the flexible coupling structure, the weight of the connecting shaft can be received by the thrust spherical bearing portion, and the weight can be further received on a side where the driven shaft is provided.

In the flexible coupling structure according to the present invention, the gear coupling structure may be a vertical axis type, the thrust spherical bearing portion may be provided above or below the radial spherical bearing portion, and the thrust spherical bearing portion and the radial spherical bearing portion may be incorporated in a bearing supporting portion such that the thrust spherical bearing portion is located on a far side of the radial spherical bearing portion.

As above, in a case where the thrust spherical bearing portion and the radial spherical bearing portion are incorporated in the bearing supporting portion in this order from the far side, these two bearing portions can be integrated in the bearing supporting portion by retaining the radial spherical bearing portion with, for example, a retaining ring at the bearing supporting portion. With this, with these two bearing portions incorporated in the bearing supporting portion, these two bearing portions can be easily attached to and detached from the bearing supporting shaft. As a result, it is unnecessary to attach or detach two bearing portions to or from the bearing supporting portion and the bearing supporting shaft one by one. Thus, the attachment and the detachment are easy.

In the flexible coupling structure according to the present invention, the radial spherical bearing portion may be high in load force, and a load in a radial direction and thrust direction may be supported by the radial spherical bearing portion without providing a thrust spherical bearing portion.

With this, the load in the radial direction and thrust direction can be supported by the radial spherical bearing portion, and the configuration can be simplified.

In the flexible coupling structure according to the present invention, one or each of the radial spherical bearing portion and the thrust spherical bearing portion may be a spherical slide bearing portion or a spherical rolling bearing portion.

Since each of the radial spherical slide bearing portion, the radial spherical rolling bearing portion, the thrust spherical slide bearing portion, and the thrust spherical rolling bearing portion is a general-purpose machine element, the manufacturing cost and maintenance cost for the flexible coupling structure can be reduced.

In the flexible coupling structure according to the present invention, the gear coupling structure may include a driving tubular portion to which a driving shaft is coupled, a driven tubular portion to which a driven shaft is coupled, and a connecting shaft configured to transmit rotation of the driving tubular portion coupled to the driving shaft to the driven tubular portion coupled to the driven shaft, and a bearing supporting shaft to which the radial spherical bearing portion is attached may be attached to any one of a side where the connecting shaft is provided, a side where the driving tubular portion is provided, a side where the driven tubular portion is provided, the driving shaft, and the driven shaft.

As above, the bearing supporting shaft to which the radial spherical bearing portion is attached can be attached to any one of the side where the connecting shaft is provided, the side where the driving tubular portion is provided, the side where the driven tubular portion is provided, the driving shaft, and the driven shaft. Therefore, rational means for attaching the bearing supporting shaft and the radial spherical bearing portion may be selected depending on the spec of the flexible coupling.

In the flexible coupling structure according to the present invention, the gear coupling structure may include a driving tubular portion to which a driving shaft is coupled, a driven tubular portion to which a driven shaft is coupled, and a connecting shaft configured to transmit rotation of the driving tubular portion coupled to the driving shaft to the driven tubular portion coupled to the driven shaft, and a bearing supporting shaft to which the radial spherical bearing portion and the thrust spherical bearing portion are attached may be attached to any one of a side where the connecting shaft is provided, a side where the driving tubular portion is provided, a side where the driven tubular portion is provided, the driving shaft, and the driven shaft.

As above, the bearing supporting shaft to which the radial spherical bearing portion and the thrust spherical bearing portion are attached can be attached to any one of the side where the connecting shaft is provided, the side where the driving tubular portion is provided, the side where the driven tubular portion is provided, the driving shaft, and the driven shaft. Therefore, rational means for attaching the bearing supporting shaft, the radial spherical bearing portion, and the thrust spherical bearing portion can be selected depending on the spec of the flexible coupling.

In the flexible coupling structure according to the present invention, the gear coupling structure may include a driving tubular portion to which a driving shaft is coupled, a driven tubular portion to which a driven shaft is coupled, and a connecting shaft configured to transmit rotation of the driving tubular portion coupled to the driving shaft to the driven tubular portion coupled to the driven shaft, and a bearing supporting portion having an inner side to which the radial spherical bearing portion is attached may be attached to any one of a side where the connecting shaft is provided, a side where the driving tubular portion is provided, a side where the driven tubular portion is provided, the driving shaft, and the driven shaft.

As above, the bearing supporting portion having the inner side to which the radial spherical bearing portion is attached can be attached to any one of the side where the connecting shaft is provided, the side where the driving tubular portion is provided, the side where the driven tubular portion is provided, the driving shaft, and the driven shaft. Therefore, rational means for attaching the bearing supporting portion and the radial spherical bearing portion can be selected depending on the spec of the flexible coupling.

In the flexible coupling structure according to the present invention, the gear coupling structure may include a driving tubular portion to which a driving shaft is coupled, a driven tubular portion to which a driven shaft is coupled, and a connecting shaft configured to transmit rotation of the driving tubular portion coupled to the driving shaft to the driven tubular portion coupled to the driven shaft, and a bearing supporting portion having an inner side to which the radial spherical bearing portion and the thrust spherical bearing portion are attached may be attached to any one of a side where the connecting shaft is provided, a side where the driving tubular portion is provided, a side where the driven tubular portion is provided, the driving shaft, and the driven shaft.

As above, the bearing supporting portion having the inner side to which the radial spherical bearing portion and the thrust spherical bearing portion are attached can be attached to any one of the side where the connecting shaft is attached, the side where the driving tubular portion is provided, the side where the driven tubular portion is provided, the driving shaft, and the driven shaft. Therefore, rational means for attaching the bearing supporting portion, the radial spherical bearing portion, and the thrust spherical bearing portion can be selected depending on the spec of the flexible coupling.

In the flexible coupling structure according to the present invention, an engaging gear portion including the outer gear and the inner gear may be sectioned by a lid portion as a gear chamber, the gear chamber may be filled with lubricating oil and sealed by the lid portion, and the lid portion may be integral with a bearing supporting shaft.

As above, in a case where the engaging gear portion including the outer gear and the inner gear is sectioned by the lid portion as the gear chamber, and the gear chamber is filled with the lubricating oil, the inner gear and the outer gear can be lubricated by a small amount of lubricating oil. Then, by providing the bearing supporting shaft at the lid portion, the lid portion can also serve as a member for providing the bearing supporting shaft. In addition, the gear chamber can be formed by the lid portion to be simple in configuration at low cost.

In the flexible coupling structure according to the present invention, an engaging gear portion including the outer gear and the inner gear may be sectioned by a lid portion as a gear chamber, the gear chamber may be filled with lubricating oil and sealed by the lid portion, and the lid portion may support at least the radial spherical bearing portion.

With this, as with the above invention, the inner gear and the outer gear can be lubricated by a small amount of lubricating oil, and the gear chamber can be formed to be simple in configuration at low cost. Moreover, by providing the radial spherical bearing portion at the lid portion, the lid portion can also serve as a member for providing the radial spherical bearing portion.

In the flexible coupling structure according to the present invention, the gear coupling structure may include a driving tubular portion to which a driving shaft is coupled, a driven tubular portion to which a driven shaft is coupled, and a connecting shaft configured to transmit rotation of the driving tubular portion coupled to the driving shaft to the driven tubular portion coupled to the driven shaft, and the connecting shaft may be divided into a shaft main body portion and a divided end portion on which an inner gear is formed, and the shaft main body portion and the divided end portion may be integral with each other with joint bolts including a reamer bolt.

With this, at one of the driving shaft and the driven shaft, the divided end portion at which the flexible coupling structure is provided can be separated from the shaft main body portion which is detachably coupled to the divided end portion. With this, whether or not the assembling of the flexible coupling structure is appropriate can be confirmed with the shaft main body portion not yet coupled to the divided end portion. The confirmation of whether or not the assembling of the flexible coupling structure is appropriate denotes confirmation of whether or not the center positions of the gear coupling structure and bearing portion when the inclination angles of the central axis of the driven tubular portion (or driving tubular portion) and the central axis of the connecting shaft are changed coincide with each other.

In the flexible coupling structure according to the present invention, the gear coupling structure may include a driving tubular portion to which a driving shaft is coupled, a driven tubular portion to which a driven shaft is coupled, and a connecting shaft configured to transmit rotation of the driving tubular portion coupled to the driving shaft to the driven tubular portion coupled to the driven shaft, and the outer gear or the inner gear may be formed on the driving tubular portion and the driven tubular portion, and the inner gear or the outer gear may be formed on the connecting shaft.

The outer gear or inner gear formed on the driving tubular portion to which the driving shaft is coupled engages with the inner gear or outer gear formed on the connecting shaft. Then, the other inner gear or outer gear formed on the connecting shaft engages with the outer gear or inner gear formed on the driven tubular portion to which the driven shaft is coupled. With this, the rotation of the driving tubular portion to which the driving shaft is coupled can be transmitted through the connecting shaft to the driven tubular portion to which the driven shaft is coupled.

A marine thruster device according to the present invention includes: the flexible coupling structure of the present invention, wherein rotation of a driving portion is transmitted through the flexible coupling structure to an input shaft of a marine thruster.

In accordance with the marine thruster device of the present invention, the rotation of the driving portion can be transmitted through the flexible coupling structure to the input shaft of the marine thruster. Then, in accordance with the marine thruster device, it is unnecessary to rotatably attach the flexible coupling structure to a vertical wall portion or a floor portion using bearings to prevent the lateral vibration of the flexible coupling structure. Therefore, although it is difficult to reserve spaces in a ship, the vertical wall portion, the floor portion, and the bearing installation space can be efficiently used for the other purpose.

### Advantageous Effects of Invention

In accordance with the flexible coupling structure and marine thruster device of the present invention, the lateral vibration of the flexible coupling can be prevented. Therefore, it is unnecessary to support the flexible coupling, and the great cost and work process, such as the manufacturing cost, construction cost, and installation work for the wall portion and floor portion for supporting the flexible coupling, can be reduced.

### Brief Description of Drawings

[Fig. 1] Fig. 1 is a longitudinal sectional view showing a flexible coupling including a flexible coupling structure according to Embodiment 1 of the present invention.
[Fig. 2A] Fig. 2A is a longitudinal sectional view showing the flexible coupling according to Embodiment 2 of the present invention.
[Fig. 2B] Fig. 2B is an enlarged longitudinal sectional view showing a bearing structure of the flexible coupling according to Embodiment 2 of the present invention.
[Fig. 3] Fig. 3 is a front view showing a marine thruster device including the flexible coupling structure according to Embodiment 2.
[Fig. 4] Fig. 4 is a longitudinal sectional view showing a state where assembling of the flexible coupling structure of Embodiment 2 is being confirmed.
[Fig. 5] Fig. 5 is a longitudinal sectional view showing a state where a driven shaft coupled to the flexible coupling of Embodiment 2 is displaced parallel.
[Fig. 6] Fig. 6 is a longitudinal sectional view showing a state where a driving shaft and driven shaft coupled to the flexible coupling of Embodiment 2 are displaced angularly.
[Fig. 7] Fig. 7 is a longitudinal sectional view showing the flexible coupling according to Embodiment 3 of the present invention.
[Fig. 8] Fig. 8 is a longitudinal sectional view showing the flexible coupling according to Embodiment 4 of the present invention.
[Fig. 9] Fig. 9 is a longitudinal sectional view showing the flexible coupling according to Embodiment 5 of the present invention.
[Fig. 10] Fig. 10 is a longitudinal sectional view showing the flexible coupling according to Embodiment 6 of the present invention.
[Fig. 11] Fig. 11 is a longitudinal sectional view showing a conventional gear coupling.
[Figs. 12] Fig. 12(a) is a longitudinal sectional view showing a state where both axes are displaced in a radial direction in the conventional gear coupling shown in Fig. 11, and Fig. 12(b) is a longitudinal sectional view showing a state where both axes are inclined.
[Fig. 13] Fig. 13(a) is a longitudinal sectional view showing a state where both axes do not intersect with each other and are not parallel to each other in the conventional gear coupling shown in Fig. 11, and Fig. 13(b) is a longitudinal sectional view showing a state where both axes are on the same line and an axial distance changes.
[Fig. 14] Fig. 14 is a front view showing an example in which the conventional gear coupling shown in Fig. 11 is applied as a flexible coupling of a ship.

### Description of Embodiments

### Embodiment 1

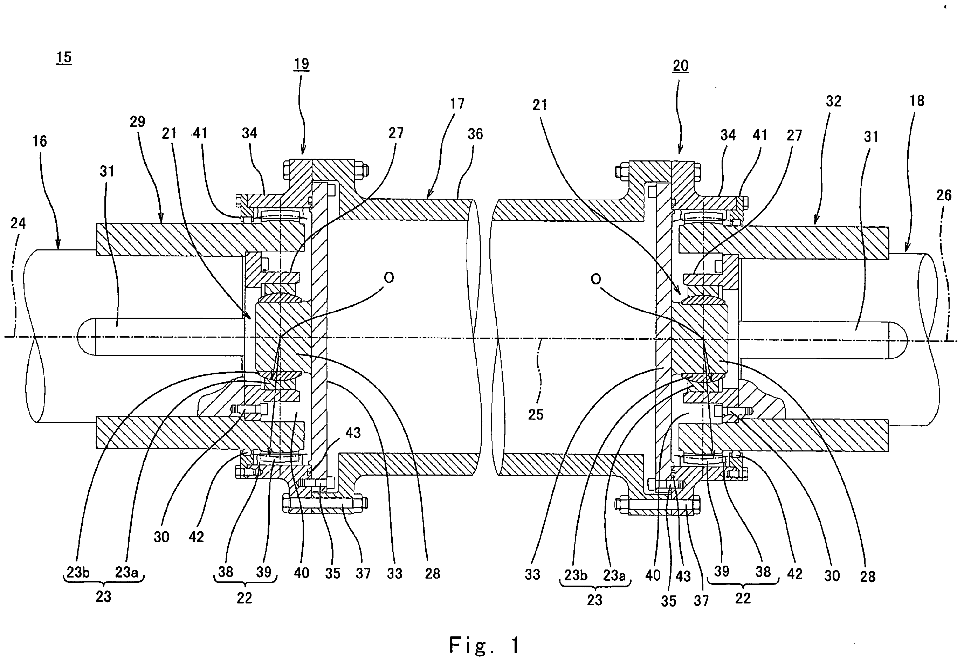

Hereinafter, Embodiment 1 of a flexible coupling structure according to the present invention will be explained in reference to Fig. 1. A flexible coupling 15 shown in Fig. 1 transmits the rotation of a driving shaft 16 provided at a driving portion (not shown), such as an electric motor, through a first flexible coupling structure 19, a connecting shaft 17, a second flexible coupling structure 20, and a driven shaft 18 to a propeller of a marine thruster (not shown). The driving shaft 16, the first flexible coupling structure 19, the connecting shaft 17, the second flexible coupling structure 20, and the driven shaft 18 are arranged substantially laterally.

Moreover, the connecting shaft 17 is comparatively long and rotates, for example, at a rate of several hundreds of revolutions per minute or higher. The driving shaft 16 is rotatably provided at the driving portion, and the driven shaft 18 is rotatably provided at the thruster. Therefore, the connecting shaft 17 is rotatably supported by the driving portion and the thruster via the driving shaft 16 and the driven shaft 18.

As shown in Fig. 1, the first flexible coupling structure 19 can connect a right end portion of the driving shaft 16 and a left end portion of the connecting shaft 17 and transmit the rotation of the driving shaft 16 to the connecting shaft 17. The first flexible coupling structure 19 includes a rotational center positioning mechanism 21 and a power transmission mechanism 22.

As shown in Fig. 1, the rotational center positioning mechanism 21 includes a radial spherical bearing portion 23. The radial spherical bearing portion 23 is, for example, a radial spherical slide bearing portion and couples respective end portions of the driving shaft 16 and connecting shaft 17 to each other such that the driving shaft 16 and the connecting shaft 17 can rotate and incline. An intersection point when respective central axes 24 and 25 of the driving shaft 16 and the connecting shaft 17 incline is O. Inclination angles of the central axes 24 and 25 can be changed based on this intersection point O as a center, and the central axes 24 and 25 can incline freely.

As shown in Fig. 1, the radial spherical bearing portion 23 includes an outer ring 23a and an inner ring 23b. The outer ring 23a is attached so as to fit in a bearing supporting portion 27 having a short cylindrical shape. The inner ring 23b is attached so as to fit in a bearing supporting shaft 28. The bearing supporting portion 27 is attached to an inner side of a driving tubular portion 29 having a short cylindrical shape and is positioned at a step portion formed on an inner peripheral surface of the driving tubular portion 29. Moreover, the right end portion of the driving shaft 16 is attached to an inner hole of the driving tubular portion 29, and the bearing supporting portion 27 is fastened to a right end surface of the driving shaft 16 with a plurality of bolts 30. Then, the driving shaft 16 and the driving tubular portion 29 are joined to each other with a key 31, so that a rotational force can be transmitted.

Further, as shown in Fig. 1, the bearing supporting shaft 28 is provided at a center of a lid portion 33 having a circular plate shape so as to project from the lid portion 33. The lid portion 33 is fastened to a divided end portion 34 having an annular shape with a plurality of bolts 35. The divided end portion 34 constitutes the left end portion of the connecting shaft 17. The divided end portion 34 is fastened to a shaft main body portion 36 with a plurality of reamer bolts 37 and is separably coupled to the shaft main body portion 36. To be specific, the connecting shaft 17 includes the shaft main body portion 36 and the divided end portion 34 which are hollow.

As shown in Fig. 1, the power transmission mechanism 22 is a gear coupling including an inner gear 38 and an outer gear 39. The power transmission mechanism 22 can transmit the rotation of the driving shaft 16 to the connecting shaft 17 even if the inclination angles of the central axes 24 and 25 are changed based on the intersection point O as a center.

As shown in Fig. 1, the outer gear 39 of the power transmission mechanism 22 is provided on an outer peripheral surface of a right end portion of the driving tubular portion 29, and the inner gear 38 is provided on an inner peripheral surface of the divided end portion 34. Then, the inner gear 38 and the outer gear 39 engage with each other, and the rotational force can be transmitted by this engagement.

Then, as shown in Fig. 1, the outer gear 39 is subjected to crowning. As above, since the outer gear 39 is subjected to the crowning, the inclination angle of the central axis 24 of the driving shaft 16 and the inclination angle of the central axis 25 of the connecting shaft 17 can be changed based on the intersection point O as a center.

To be specific, since the tooth tips and tooth surfaces of the outer gear 39 are subjected to the crowning so as to have predetermined curved surfaces, the rotation of the driving shaft 16 can be smoothly transmitted to the connecting shaft 17 even if the inclination angle of the central axis 24 of the driving shaft 16 and the inclination angle of the central axis 25 of the connecting shaft 17 are changed based on the intersection point O as a center.

Moreover, as shown in Fig. 1, a crowning center position O of the power transmission mechanism 22 and a center position O of the radial spherical bearing portion 23 of the rotational center positioning mechanism 21 coincide with each other. To be specific, the radial spherical bearing portion 23 is provided such that the outer gear 39 can incline relatively with respect to the inner gear 38 based on the center position O.

With this configuration, even if an unbalance force by an unbalance is generated with respect to the connecting shaft 17, this load can be supported by the radial spherical bearing portion 23. Therefore, a lateral vibration load during the rotation can be supported, and lateral vibrations do not occur. Moreover, the center of the radial spherical bearing portion 23 and the crowning center of the tooth tip of the outer gear 39 coincide with each other at the intersection point O. Therefore, the first flexible coupling structure 19 can freely perform slight relative movements and rotational movements while receiving the unbalance force.

Next, the second flexible coupling structure 20 will be explained in reference to Fig. 1. The second flexible coupling structure 20 can connect a right end portion of the connecting shaft 17 and a left end portion of the driven shaft 18 and transmit the rotation of the connecting shaft 17 to the driven shaft 18. The left end portion of the driven shaft 18 is attached to an inner hole of a driven tubular portion 32 included in the second flexible coupling structure 20.

The other configuration and actions of the second flexible coupling structure 20 are the same as those of the first flexible coupling structure 19. The same reference signs are used for the same components, and explanations thereof are omitted.

In accordance with the flexible coupling 15 configured as above and shown in Fig. 1, the lateral vibration of the connecting shaft 17 does not occur while the connecting shaft 17 rotates. Therefore, it is unnecessary to rotatably attach the connecting shaft 17 to, for example, a floor portion with a bearing to prevent the lateral vibration of the connecting shaft 17. On this account, great cost and work process, such as manufacturing cost, construction cost, and installation work for the floor portion and the like, can be reduced.

Moreover, as shown in Fig. 1, the radial spherical bearing portion 23 is a radial spherical slide bearing portion, and the radial spherical slide bearing portion is a general-purpose machine element. Therefore, the manufacturing cost and maintenance cost for the first and second flexible coupling structures 19 and 20 can be reduced.

Further, as shown in Fig. 1, in the first flexible coupling structure 19, the bearing supporting portion 27 in which the radial spherical bearing portion 23 is incorporated is provided at the right end portion of the driving shaft 16. With this configuration, regardless of the connecting shaft 17 having a large size and a high weight, the bearing supporting portion 27 in which the radial spherical bearing portion 23 is incorporated can be easily attached to and detached from the end portion of the driving shaft 16. Thus, the attachment and the detachment are easy. Then, the lid portion 33 provided with the bearing supporting shaft 28 is attached to the divided end portion 34. Similarly, regardless of the connecting shaft 17 having a large size and a high weight, the lid portion 33 can be attached to the divided end portion 34 with the connecting shaft 17 not attached to the divided end portion 34. After the assembling of these members is completed, these members are assembled and integrated with the connecting shaft 17. Therefore, it is possible to reduce the workload of attaching the connecting shaft 17 to the flexible coupling 15. Since the second flexible coupling structure 20 is configured in the same manner, a detailed explanation thereof is omitted.

Then, as shown in Fig. 1, in the first flexible coupling structure 19, a gear chamber 40 is formed between the end portion of the driving shaft 16 and the end portion of the connecting shaft 17. The inner gear 38 and the outer gear 39 are provided in the gear chamber 40. Further, lubricating oil for lubricating the inner gear 38 and the outer gear 39 is stored in the gear chamber 40. A gap between an outer peripheral surface of the driving tubular portion 29 and an inner peripheral surface of the divided end portion 34 is sealed by a side cover 41.

The gear chamber 40 is formed by the right end surface of the driving shaft 16, the right end portion of the driving tubular portion 29, the side cover 41, the divided end portion 34, and the lid portion 33, and an inner portion thereof is sealed. Reference signs 42 and 43 denote sealing members.

As above, in a case where the gear chamber 40 is formed between the end portion of the driving shaft 16 and the end portion of the connecting shaft 17 so as to store the inner gear 38 and the outer gear 39, it is unnecessary to fill the lubricating oil for lubricating the inner gear 38 and the outer gear 39 in the entire inner portion of the connecting shaft 17, and the amount of lubricating oil can be minimized. Since the second flexible coupling structure 20 is configured in the same manner, a detailed explanation thereof is omitted.

Moreover, as shown in Fig. 1, the connecting shaft 17 is formed to have a substantially cylindrical shape, the lid portions 33 are respectively provided at both left and right opening end portions of the connecting shaft 17, the lid portions 33 respectively form the gear chambers 40, and the bearing supporting shaft 28 to which the radial spherical bearing portion 23 is attached is provided at the lid portion 33.

Further, in a case where the connecting shaft 17 is formed as a hollow shaft having a substantially cylindrical shape, the connecting shaft 17 becomes light in weight. Therefore, rotation start-up torque of the driving portion can be reduced, and the work of the assembling and disassembling of the flexible coupling 15 can be reduced. Then, in a case where the lid portions 33 are respectively provided at both opening end portions of the connecting shaft 17 and respectively form the gear chambers 40, the gear chamber 40 can be formed to be simple in configuration at low cost. Moreover, in a case where the bearing supporting shaft 28 is provided at the lid portion 33, the lid portion 33 can also serve as a member for providing the bearing supporting shaft 28.

### Embodiment 2

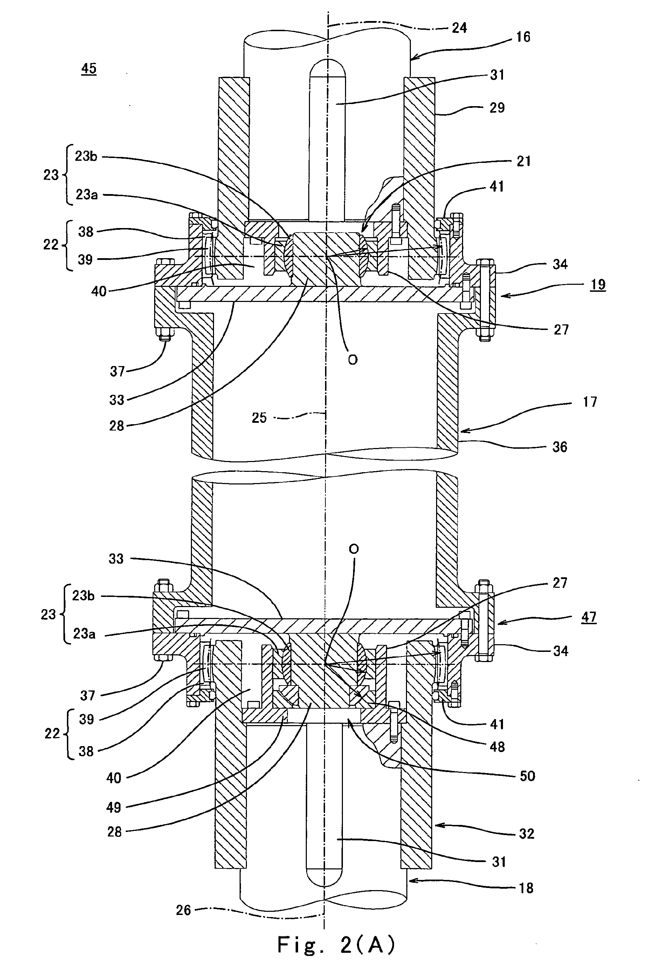

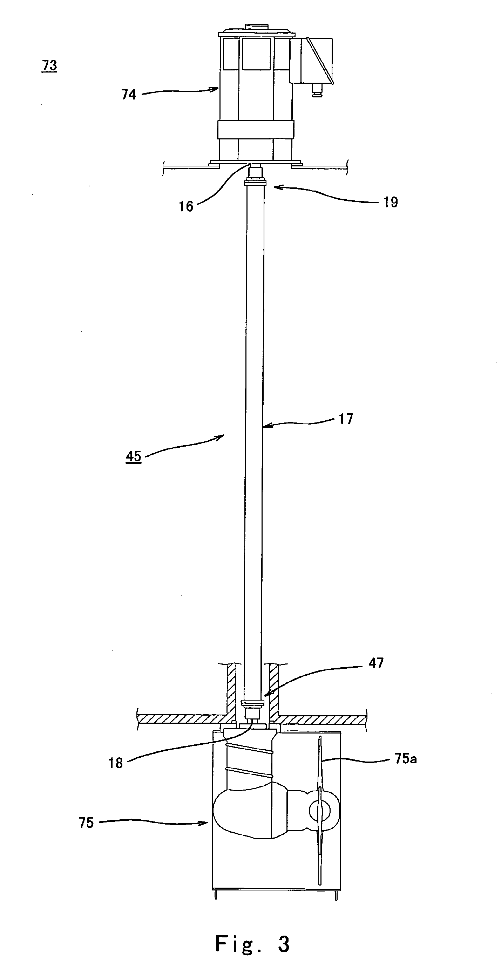

Next, Embodiment 2 of the flexible coupling structure and the marine thruster device including the flexible coupling structure according to the present invention will be explained in reference to Figs. 2A to 4. As with the flexible coupling 15 of Embodiment 1 shown in Fig. 1, a flexible coupling 45 of Embodiment 2 shown in Figs. 2A and 3 transmits the rotation of the driving shaft 16 provided at a driving portion 74 through the first flexible coupling structure 19, the connecting shaft 17, a second flexible coupling structure 47, and the driven shaft (input shaft) 18 to a propeller 75a of a marine the thruster 75 (see Fig. 3).

A marine thruster device 73 includes the driving portion 74, the flexible coupling 45, and the marine the thruster 75.

Although the flexible coupling 15 of Embodiment 1 shown in Fig. 1 is arranged substantially laterally, the flexible coupling 45 of Embodiment 2 shown in Fig. 2A and 3 is arranged substantially in parallel with a vertical direction (vertical axis type), and the driving shaft 16, the first flexible coupling structure 19, the connecting shaft 17, the second flexible coupling structure 47, and the driven shaft 18 are arranged in this order from an upper side to a lower side.

To prevent the weight of the connecting shaft 17 from being applied to the driving portion 74 via the driving shaft 16, the second flexible coupling structure 47 including a thrust spherical bearing portion 48 is adopted as shown in Fig. 2A. Then, the weight of the connecting shaft 17 applied to the thrust spherical bearing portion 48 is supported by the thruster 75.

Other than the above, the flexible coupling 45 of Embodiment 2 is the same as the flexible coupling 15 of Embodiment 1. The same reference signs are used for the same components, and detailed explanations thereof are omitted.

In accordance with the flexible coupling 45 of Embodiment 2 shown in Fig. 2A, the load of the connecting shaft 17 is supported by the thrust spherical bearing portion 48 of the second flexible coupling structure 47. Therefore, the load of the connecting shaft 17 can be prevented from being applied to the driving portion 74 at which the driving shaft 16 is provided. Thus, a standard design product can be selected and used as the driving portion 74. In the case of an example in which transmission power is a 4,500 kw class, the outer diameter, length, and weight of the outer tube are respectively 400 mm, 5,500 mm, and 800 kg. Therefore, if the thrust spherical bearing portion 48 is provided on a side where the first flexible coupling structure 19 is provided, the weight thereof needs to be supported by a side where the driving portion 74 is provided. However, since the driving portion is usually a standard design product, it is not configured to be able to support the extra weight. Therefore, the cost for the driving portion 74 can be reduced by adopting such configuration.

Thus, it is possible to provide the flexible coupling structure of a self load supporting type configured such that the load is received by a side where the thruster 75 is provided and the driving portion 74 is not influenced, that is, the flexible coupling structure of a self-contained type.

Moreover, the reason why the flexible coupling is configured such that the load of the connecting shaft 17 is applied to the thruster 75 via the thrust spherical bearing portion 48 of the second flexible coupling structure 47 is because: the design of a structure configured to receive a thrust load in a direction substantially parallel to the vertical direction is more flexible than the design of a structure configured to receive the thrust load on a side where the driving shaft 16 is provided; and the configuration becomes simple.

Moreover, as shown in Fig. 2A, the thrust spherical bearing portion 48 and radial spherical bearing portion 23 included in the second flexible coupling structure 47 are incorporated in this order in a direction from a far side of the bearing supporting portion 27, that is, a side close to a shaft end surface of the driven shaft 18 toward a near side of the bearing supporting portion 27, that is, an opening side of the bearing supporting portion 27.

A projection 49 is formed on a far-side inner surface of the bearing supporting portion 27. The thrust spherical bearing portion 48 and the radial spherical bearing portion 23 are positioned by the projection 49 in a far-side direction (lower direction in Fig. 2A).

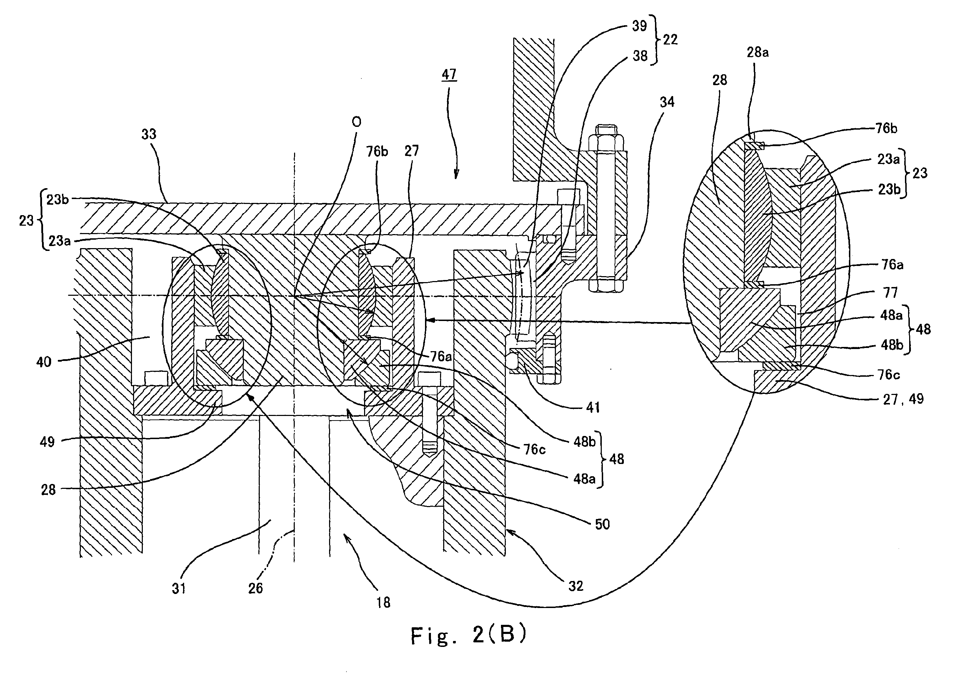

Then, although not shown in Fig. 2A, as shown in an enlarged cross-sectional view of Fig. 2B, a positioning shim 76a is inserted in a gap portion between a lower end portion of the inner ring 23b of the radial spherical bearing portion 23 and an upper end portion of an inner ring 48a of the thrust spherical bearing portion 48 (between the radial spherical bearing portion 23 and the thrust spherical bearing portion 48).

Moreover, a positioning shim 76b is inserted in a gap portion between an upper end portion of the inner ring 23b of the radial spherical bearing portion 23 and a diameter-expanded shoulder portion 28a of the bearing supporting shaft 28 (between the radial spherical bearing portion 23 and the shoulder portion 28a).

Further, a positioning shim 76c is inserted in a gap portion between a lower end portion of an outer ring 48b of the thrust spherical bearing portion 48 and the projection 49 of the bearing supporting portion 27 (between the thrust spherical bearing portion 48 and the projection 49).

With this, the rotational centers of the thrust spherical bearing portion 48 and radial spherical bearing portion 23 can be finely adjusted and easily coincide with each other. In addition, the crowning center position of the outer gear 39 can also be adjusted and coincide with the above rotational centers at the intersection point O. Such adjustment can be completed in a short period of time.

Moreover, as shown in an enlarged cross-sectional view of Fig. 2B, a gap portion 77 is formed between the outer ring 48b of the thrust spherical bearing portion 48 and an inner peripheral surface of the bearing supporting portion 27. By forming the gap portion 77, the unbalance force is received by the radial spherical bearing portion 23 and is not received by the thrust spherical bearing portion 48. The thrust spherical bearing portion 48 receives only the weight of the connecting shaft 17 of the flexible coupling 45.

Then, the shim 76a inserted between the radial spherical bearing portion 23 and the thrust spherical bearing portion 48 relatively adjusts the center positions of the bearing portions 23 and 48 and causes the center positions of the bearing portions 23 and 48 to coincide with each other. This is a first adjustment operation when assembling the bearing portions 23 and 48.

Then, the shims 76b and 76c are used in a second adjustment operation. To be specific, the adjustment is carried out by the shims 76b and 76c such that the center position of a set product obtained by combining the bearing portions 23 and 48 whose rotational centers coincide with each other coincides with the crowning center position. Thus, the bearing portions 23 and 48 can be assembled.

The other embodiment using the radial spherical bearing portion 23 and the like and the thrust spherical bearing portion 48 and the like has the same configuration as above, so that an explanation and drawing thereof are omitted.

As above, in a case where the thrust spherical bearing portion 48 and the radial spherical bearing portion 23 are incorporated in this order in the direction from the far side of the bearing supporting portion 27, that is, the side close to the shaft end surface of the driven shaft 18 toward the near side of the bearing supporting portion 27, that is, the opening side of the bearing supporting portion 27, these two bearing portions 48 and 23 can be integrated in the bearing supporting portion 27. Therefore, with these two bearing portions 48 and 23 incorporated in the bearing supporting portion 27, these two bearing portions 48 and 23 can be easily attached to and detached from the bearing supporting shaft 28 provided at the lid portion 33 of the connecting shaft 17. As a result, it is unnecessary to attach and detach these two bearing portions 48 and 23 to and from the bearing supporting portion 27 and the bearing supporting shaft 28 one by one. Thus, the attachment and the detachment are easy.

Moreover, as shown in Fig. 2A, the thrust spherical bearing portion 48 of a rotational center positioning mechanism 50 is configured such that the intersection point is O when the central axes 26 and 25 of the driven shaft 18 and connecting shaft 17 incline, and the inclination angles of the central axes 26 and 25 can be changed based on the intersection point O as a center. The intersection point O is the center of the crowning of the outer gear 39.

Therefore, three center positions of the radial spherical bearing portion 23 and thrust spherical bearing portion 48 of the rotational center positioning mechanism 50 and the power transmission mechanism 22 (engaging mechanism including the outer gear 39 and the inner gear 38) when changing the inclination angle of the central axis 26 of the driven shaft 18 and the inclination angle of the central axis 25 of the connecting shaft 17 coincide with one another at the intersection point O.

Therefore, the thrust load based on the weight of the connecting shaft 17 can be supported by the thrust spherical bearing portion 48 in any state where the inclination angles of the central axes 26 and 25 of the driven shaft 18 and connecting shaft 17 are changed.

Further, as shown in Fig. 2A, the thrust spherical bearing portion 48 is a thrust spherical slide bearing portion, and this thrust spherical slide bearing portion is a general-purpose machine element. Therefore, the manufacturing cost and maintenance cost for the second flexible coupling structure 47 can be reduced.

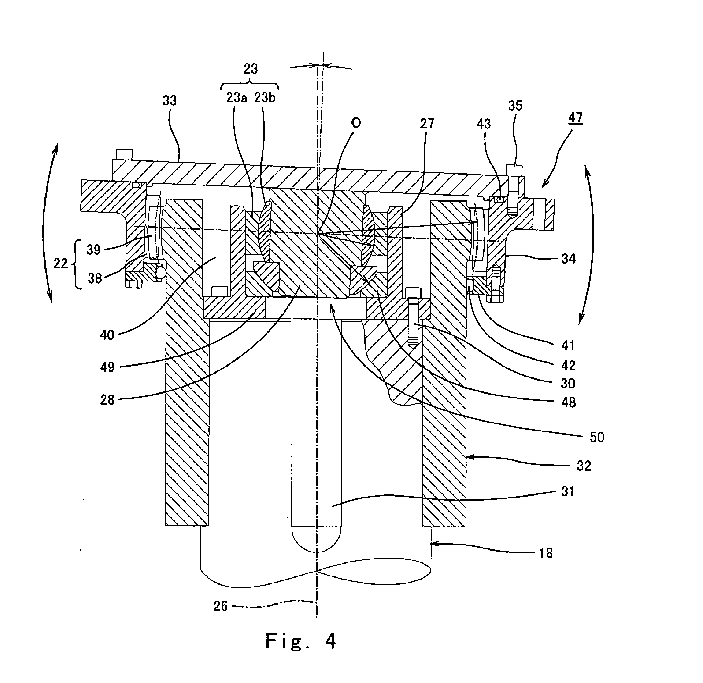

Next, confirmation of whether or not the assembling of the second flexible coupling structure 47 is appropriate in a state where the shaft main body portion 36 of the connecting shaft 17 is not yet coupled to the divided end portion 34 of the connecting shaft 17 will be explained in reference to Fig. 4.

The confirmation of whether or not the assembling of the second flexible coupling structure 47 is appropriate denotes confirmation of whether or not three center positions of the radial spherical bearing portion 23, thrust spherical bearing portion 48, and power transmission mechanism 22 (engaging mechanism including the outer gear 39 and the inner gear 38) when changing the inclination angle of the central axis 26 of the driven shaft 18 and the inclination angle of the central axis 25 of the connecting shaft 17 coincide with one another at the intersection point O in the rotational center positioning mechanism 50 (the radial spherical bearing portion 23 and the thrust spherical bearing portion 48) and the power transmission mechanism 22 (engaging mechanism including the outer gear 39 and the inner gear 38).

The connecting shaft 17 includes: the divided end portion 34 located on a side where the second flexible coupling structure 47 is provided; and the shaft main body portion 36 detachably coupled to the divided end portion 34 with reamer bolts 37.

To be specific, as shown in Fig. 2A, in the case of confirming whether or not the assembling of the second flexible coupling structure 47 is appropriate with the shaft main body portion 36 and divided end portion 34 of the connecting shaft 17 coupled to each other, it is necessary to move the connecting shaft 17 which is large in size and high in weight. This confirmation and adjustment operation requires a large quantity of work and a lot of time.

In contrast, as shown in Fig. 4, in the case of confirming whether or not the assembling of the second flexible coupling structure 47 is appropriate with the shaft main body portion 36 of the connecting shaft 17 not yet coupled to the divided end portion 34, a subassembly including "the gears 38 and 39 and the bearing portions 23 and 48" which is light in weight and small in size is formed only by the second flexible coupling structure 47. If the crowning center position of the outer gear 39 and the rotational center positions of the spherical bearing portions 23 and 48 do not coincide with one another, this portion becomes clumsy and does not operate smoothly. In the worst case, there is the possibility of an accident, such as burning of the bearing portions 23 and 48. However, since the second flexible coupling structure 47 shown in Fig. 4 is small in size, it is easy to confirm the alignment of the second flexible coupling structure 47 by swinging the divided end portion 34 and the like by hand after the bearing portions 23 and 48 are assembled. Moreover, it is easy to determine whether or not the assembling is normally completed based on, for example, feeling of the movement of the subassembly. Therefore, these adjustment and modification can be surely carried out.

Whether or not the assembling of the first flexible coupling structure 19 is appropriate can also be confirmed in the same manner as the confirmation of whether or not the assembling of the second flexible coupling structure 47 is appropriate. Further, whether or not the assembling of each of the first and second flexible coupling structures 19 and 20 shown in Fig. 1 is appropriate can also be confirmed in the same manner as above, so that explanations thereof are omitted.

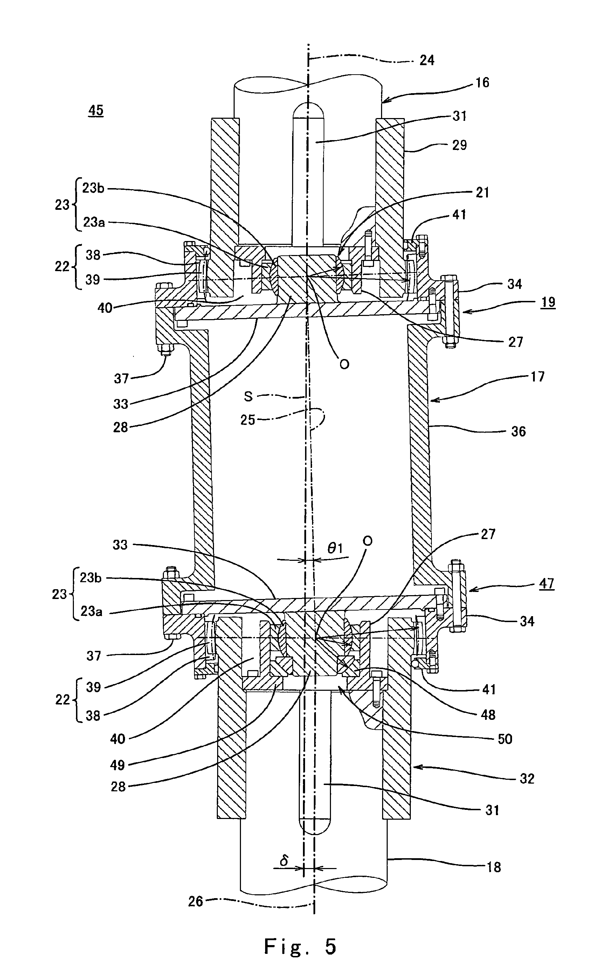

Fig. 5 is a longitudinal sectional view showing a state where the driven shaft 18 coupled to the flexible coupling 45 is displaced parallel. To be specific, the central axis 24 of the driving shaft 16 and the central axis 26 of the driven shaft 18 are parallel to a vertical axial line S, and these two central axes 24 and 26 are located to be spaced apart from each other by a gap δ. The central axis 25 of the connecting shaft 17 inclines with respect to the vertical axial line S by an angle θ1. In this state, the marine thruster device 73 is provided. Even in this state, the rotation of the driving portion 74 can be smoothly transmitted through the flexible coupling 45 to the input shaft (driven shaft 18) of the marine the thruster 75 (see Fig. 3).

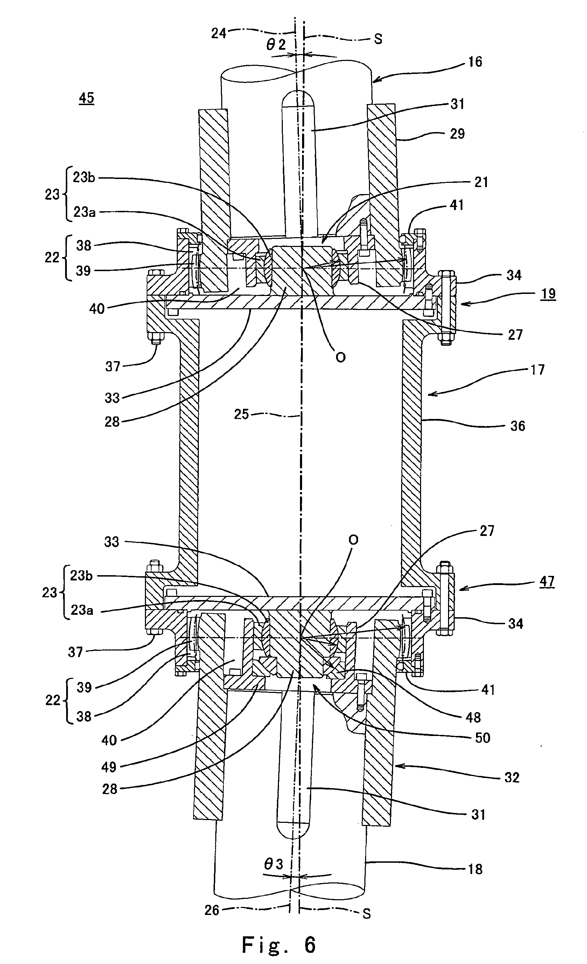

Fig. 6 is a longitudinal sectional view showing a state where the driving shaft 16 and driven shaft 18 coupled to the flexible coupling 45 are displaced angularly. To be specific, the central axis 25 of the connecting shaft 17 is parallel to the vertical axial line S, and the central axis 24 of the driving shaft 16 and the central axis 26 of the driven shaft 18 incline with respect to the vertical axial line S by angles θ2 and θ3, respectively. In this state, the marine thruster device 73 is provided. Even in this state, the rotation of the driving portion 74 can be smoothly transmitted through the flexible coupling 45 to the input shaft of the marine the thruster 75.

### Embodiment 3

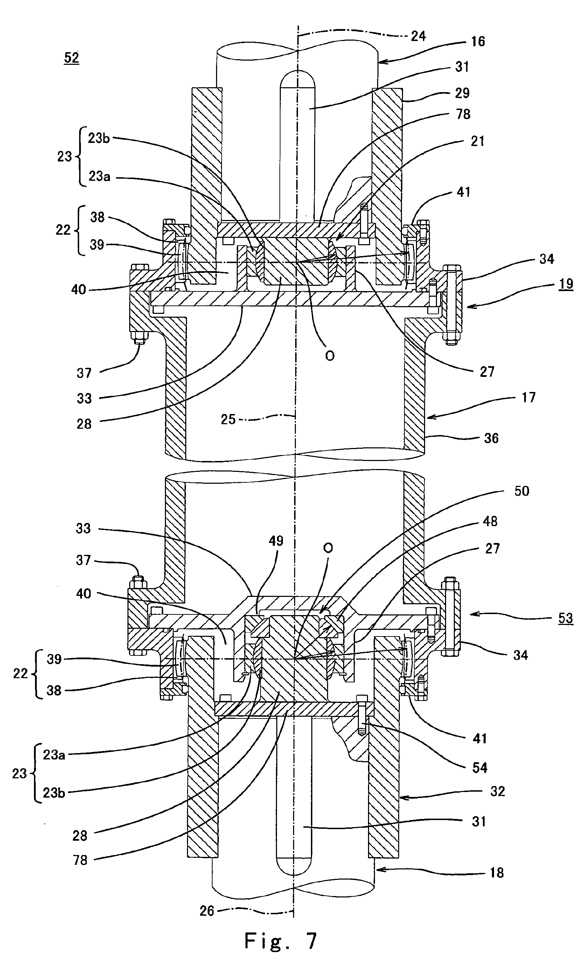

Next, Embodiment 3 of the flexible coupling structure according to the present invention will be explained in reference to Fig. 7. A flexible coupling 52 of Embodiment 3 shown in Fig. 7 is different from the flexible coupling 45 of Embodiment 2 shown in Fig. 2A in the following points. To be specific, a second flexible coupling structure 53 is different from the second flexible coupling structure 47, and the position of the bearing supporting portion 27 in which the thrust spherical bearing portion 48 and the radial spherical bearing portion 23 are incorporated and the position of the bearing supporting shaft 28 are different.

Moreover, as shown in Fig. 7, the first flexible coupling structure 19 is also different. In Embodiment 3, the bearing supporting shaft 28 is provided at the driving shaft 16, and the bearing supporting portion 27 is provided at the lid portion 33.

Other than the above, Embodiment 3 is the same as Embodiment 2. The same reference signs are used for the same components, and explanations thereof are omitted.

To be specific, in Embodiment 3 shown in Fig. 7, the bearing supporting portion 27 in which the thrust spherical bearing portion 48 and the radial spherical bearing portion 23 are incorporated is integrally provided at the lid portion 33 attached to the divided end portion 34 of the connecting shaft 17. Then, the bearing supporting shaft 28 is fastened to the shaft end surface of the driven shaft 18 with bolts 54.

Even in this case, as with Embodiment 2 shown in Fig. 2A, the gear chamber 40 can be formed by the lid portion 33 to be simple in configuration at low cost. Moreover, in a case where the radial spherical bearing portion 23 and the thrust spherical bearing portion 48 are provided at the bearing supporting portion 27 provided at the lid portion 33, the lid portion 33 can also serve as a member for providing the radial spherical bearing portion 23 and the like.

With this, these two bearing portions 23 and 48 can be incorporated, fixed, and integrated in the bearing supporting portion 27 of the lid portion 33 by positioning and retaining the bearing portions 23 and 48 with, for example, a retaining ring under the radial spherical bearing portion 23. With this, it is unnecessary to assemble the bearing portions 23 and 48 one by one. Therefore, the assembling and disassembling of this portion can be completed in a short period of time.

### Embodiment 4

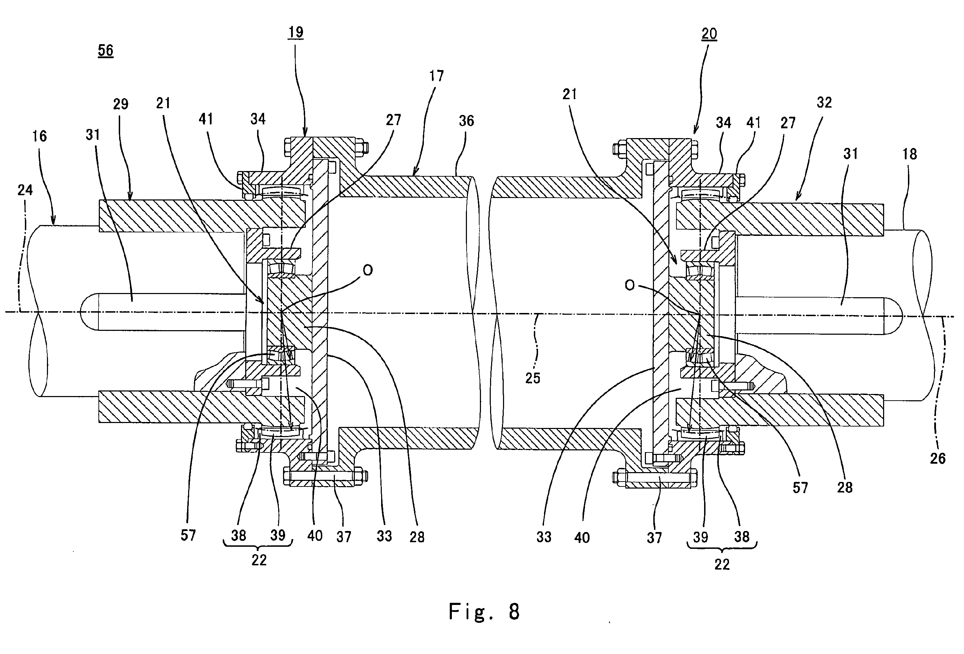

Next, Embodiment 4 of the flexible coupling structure according to the present invention will be explained in reference to Fig. 8. A flexible coupling 56 of Embodiment 4 shown in Fig. 8 is different from the flexible coupling 15 of Embodiment 1 shown in Fig. 1 in the following point. To be specific, a radial spherical bearing portion 57 provided at each of the first and second flexible coupling structures 19 and 20 is different from the radial spherical bearing portion 23 provided at each of the first and second flexible coupling structures 19 and 20. Other than the above, Embodiment 4 is the same as Embodiment 1. The same reference signs are used for the same components, and explanations thereof are omitted.

To be specific, in Embodiment 1 shown in Fig. 1, the radial spherical slide bearing portion 23 is adopted in each of the first and second flexible coupling structures 19 and 20, but in Embodiment 4 shown in Fig. 8, the radial spherical rolling bearing portion 57 is adopted in each of the first and second flexible coupling structures 19 and 20.

Since the radial spherical rolling bearing portion 57 is a mass-manufactured general-purpose machine element, the manufacturing cost and maintenance cost for the first and second flexible coupling structures 19 and 20 can be reduced.

### Embodiment 5

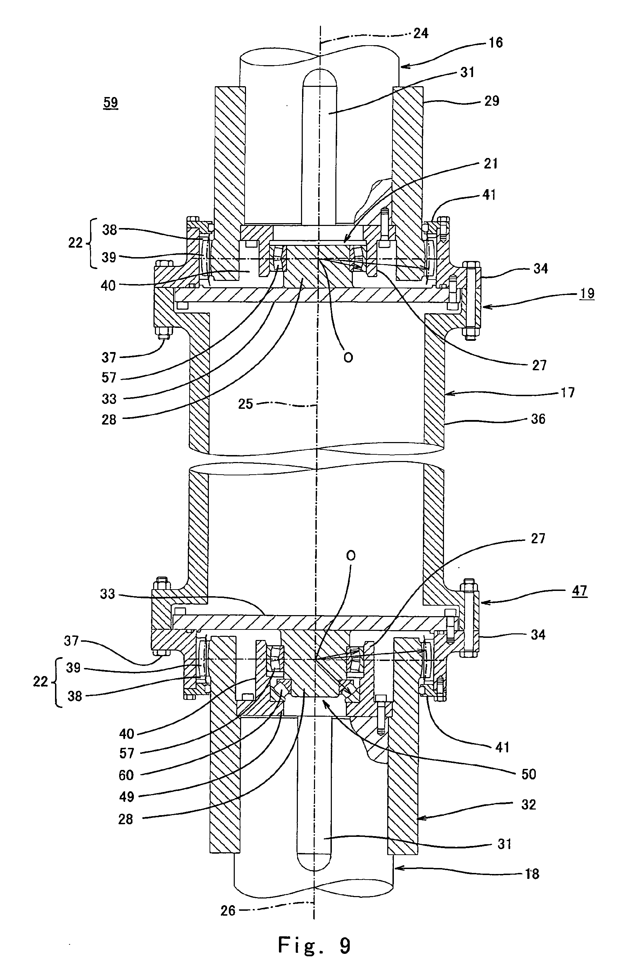

Next, Embodiment 5 of the flexible coupling structure according to the present invention will be explained in reference to Fig. 9. A flexible coupling 59 of Embodiment 5 shown in Fig. 9 is different from the flexible coupling 45 of Embodiment 2 shown in Fig. 2A in the following point. To be specific, a radial spherical bearing portion 57 and thrust spherical bearing portion 60 provided at the first and second flexible coupling structures 19 and 47 are respectively different in configuration from the radial spherical bearing portion 23 and thrust spherical bearing portion 48 provided at the first and second flexible coupling structures 19 and 47. Other than the above, Embodiment 5 is the same as Embodiment 2. The same reference signs are used for the same components, and explanations thereof are omitted.

To be specific, in Embodiment 2 shown in Fig. 2A, the radial spherical slide bearing portion 23 is adopted in each of the first and second flexible coupling structures 19 and 47, and the thrust spherical slide bearing portion 48 is adopted in the second flexible coupling structure 20, but in Embodiment 5 shown in Fig. 9, the radial spherical rolling bearing portion 57 is adopted in each of the first and second flexible coupling structures 19 and 47, and the thrust spherical rolling bearing portion 60 is adopted in the second flexible coupling structure 47.

Since the radial spherical rolling bearing portion 57 and the thrust spherical rolling bearing portion 60 are mass-manufactured general-purpose machine elements, the manufacturing cost and maintenance cost for the first and second flexible coupling structures 19 and 47 can be reduced.

### Embodiment 6

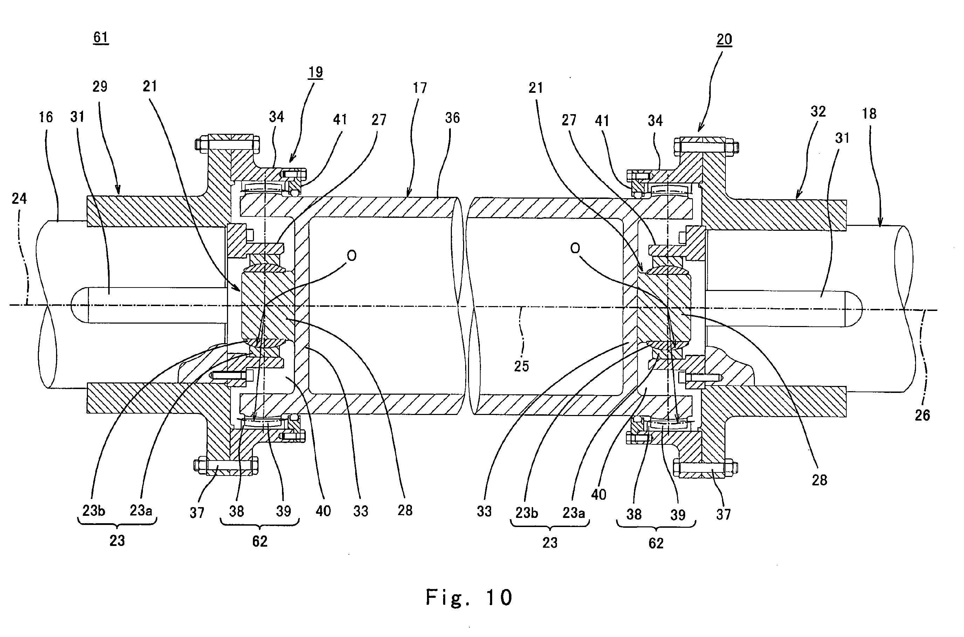

Next, Embodiment 6 of the flexible coupling structure according to the present invention will be explained in reference to Fig. 10. A flexible coupling 61 of Embodiment 6 shown in Fig. 10 is different from the flexible coupling 15 of Embodiment 1 shown in Fig. 1 in the following points. To be specific, a power transmission mechanism 62 included in each of the first and second flexible coupling structures 19 and 20 is different from the power transmission mechanism 22 included in each of the first and second flexible coupling structures 19 and 20, the lid portion 33 is different, and the shapes of the driving tubular portion 29, connecting shaft 17, and driven tubular portion 32 are different. Other than the above, Embodiment 6 is the same as Embodiment 1. The same reference signs are used for the same components, and explanations thereof are omitted.

To be specific, as shown in Fig. 10, the divided end portion 34 having a short cylindrical shape is attached with the reamer bolts 37 to the right end portion of the driving tubular portion 29 at which the first flexible coupling structure 19 of Embodiment 6 is provided. The inner gear 38 is provided on an inner peripheral surface of the divided end portion 34. Then, the inner gear 38 engages with the outer gear 39. The outer gear 39 is provided on an outer peripheral surface of the left end portion of the connecting shaft 17 formed to have a cylindrical shape. The lid portion 33 is provided integrally with the connecting shaft 17 so as to close the opening of the left end portion of the connecting shaft 17.

Similarly, as shown in Fig. 10, the divided end portion 34 having a short cylindrical shape is attached with the reamer bolts 37 to a left end portion of the driven tubular portion 32 at which the second flexible coupling structure 20 is provided. The inner gear 38 is provided on the inner peripheral surface of the divided end portion 34. Then, the inner gear 38 engages with the outer gear 39. The outer gear 39 is provided on an outer peripheral surface of the right end portion of the connecting shaft 17. The lid portion 33 is provided integrally with the connecting shaft 17 so as to close the opening of the right end portion of the connecting shaft 17.

Even with this configuration, as with the flexible coupling 15 of Embodiment 1 shown in Fig. 1, the flexible coupling 61 can transmit the rotation of the driving shaft 16 through the connecting shaft 17 to the driven shaft 18.

### Modification Embodiment

In Embodiment 2 shown in Fig. 2A and Embodiment 3 shown in Fig. 7, the thrust spherical bearing portion 48 is provided at the second flexible coupling structure 47, 53, and the driving shaft 16 and the connecting shaft 17 are mounted on the thrust spherical bearing portion 48. However, instead of this, although not shown, the thrust spherical bearing portion 48 may be provided at the first flexible coupling structure 19, and the connecting shaft 17 may be hung from the thrust spherical bearing portion 48.

Each of the above embodiments has explained the flexible coupling structure capable of transmitting the rotation of the driving shaft 16 rotated by the driving portion 74 to the driven shaft 18 coupled to the marine the thruster 75 and the marine thruster device including the flexible coupling structure. However, the present invention is applicable to a flexible coupling structure used in the other machines, instruments, and devices.

Moreover, in each of the above embodiments, an electric motor is used as the driving portion 74. However, the other power unit, such as a diesel engine, may be used.

Further, in Embodiment 2 shown in Fig. 2A, the radial spherical bearing portion 23 and the thrust spherical bearing portion 48 are incorporated in the bearing supporting portion 27 such that the rotational center positions O of the radial spherical bearing portion 23 and thrust spherical bearing portion 48 coincide with the crowning center position of the outer gear 39, and the inner gear 38 is supported by the radial spherical bearing portion 23 and the thrust spherical bearing portion 48. However, instead of this configuration, the radial spherical bearing portion 23 and the thrust spherical bearing portion 48 may be incorporated in the bearing supporting portion 27 such that the rotational center positions O of the radial spherical bearing portion 23 and thrust spherical bearing portion 48 coincide with the crowning center position of the outer gear 39, and the outer gear 39 may be supported by the radial spherical bearing portion 23 and the thrust spherical bearing portion 48. In this case, as shown in Fig. 10, the outer gear 39 is provided at the end portion of the connecting shaft 17, and the inner gear 38 is provided at the divided end portion 34 coupled to the driving tubular portion 29.

In Embodiment 1 shown in Fig. 1, the bearing supporting shaft 28 to which the radial spherical bearing portion 23 is attached is attached to the connecting shaft 17 via the lid portion 33, and the bearing supporting portion 27 is attached to the driving shaft 16. However, instead of this configuration, the bearing supporting portion 27 may be attached to the driving tubular portion 29. Further, for example, the bearing supporting shaft 28 may be attached to the driving shaft 16 or the driving tubular portion 29, and the bearing supporting portion 27 may be attached to the connecting shaft 17 via the lid portion 33.

Similarly, in Embodiment 1 shown in Fig. 1, the bearing supporting shaft 28 to which the radial spherical bearing portion 23 is attached is attached to the connecting shaft 17 via the lid portion 33, and the bearing supporting portion 27 is attached to the driven shaft 18. However, instead of this configuration, the bearing supporting portion 27 may be attached to the driven tubular portion 32. Further, for example, the bearing supporting shaft 28 may be attached to the driven shaft 18 or the driven tubular portion 32, and the bearing supporting portion 27 may be attached to the connecting shaft 17 via the lid portion 33.

Moreover, in Embodiment 2 shown in Fig. 2A, the bearing supporting shaft 28 to which the radial spherical bearing portion 23 and the thrust spherical bearing portion 48 are attached is attached to the connecting shaft 17 via the lid portion 33, and the bearing supporting portion 27 is attached to the driven shaft 18. However, instead of this configuration, the bearing supporting portion 27 may be attached to the driven tubular portion 32. Further, for example, the bearing supporting shaft 28 may be attached to the driven shaft 18 or the driven tubular portion 32, and the bearing supporting portion 27 may be attached to the connecting shaft 17 via the lid portion 33.

Further, in Fig. 2A, in a case where the thrust spherical bearing portion 48 is provided at the first flexible coupling structure 19, and the connecting shaft 17 is hung from the thrust spherical bearing portion 48, the bearing supporting shaft 28 to which the radial spherical bearing portion 23 and the thrust spherical bearing portion 48 are attached may be attached to the connecting shaft 17 via the lid portion 33, and the bearing supporting portion 27 may be attached to the driving shaft 16 or the driving tubular portion 29. Then, the bearing supporting shaft 28 may be attached to the driving shaft 16 or the driving tubular portion 29, and the bearing supporting portion 27 may be attached to the connecting shaft 17 via the lid portion 33.

Then, in each of the above embodiments, as shown in Fig. 1 for example, the bearing supporting shaft 28 is joined to the lid portion 33 by welding or the like. However, instead of this, the bearing supporting shaft 28 and the lid portion 33 may be produced as one member from one material by cutting or the like. Moreover, similarly, as shown in Fig. 7, the bearing supporting shaft 28 is joined to an attaching member 78 by welding or the like. However, instead of this, the bearing supporting shaft 28 and the attaching member 78 may be produced as one member from one material by cutting or the like.

### Industrial Applicability

As above, the flexible coupling structure according to the present invention has an excellent effect of being able to prevent the vibration problem in the flexible coupling which is large in total length. Therefore, the flexible coupling structure according to the present invention is suitably applied to marine thruster devices, machines, instruments, and devices, each including the flexible coupling.

### Reference Signs List

- 15, 45, 52, 56, 59, 61: flexible coupling
- 16: driving shaft
- 17: connecting shaft
- 18: driven shaft
- 19: first flexible coupling structure
- 20, 47, 53: second flexible coupling structure
- 21, 50: rotational center positioning mechanism
- 22, 62: power transmission mechanism
- 23: radial spherical bearing portion
- 23a: outer ring
- 23b: inner ring
- 24, 25, 26: central axis
- 27: bearing supporting portion
- 28: bearing supporting shaft
- 28a: shoulder portion
- 29: driving tubular portion
- 30, 35, 54: bolt
- 31: key
- 32: driven tubular portion
- 33: lid portion
- 34: divided end portion
- 36: shaft main body portion
- 37: reamer bolt
- 38: inner gear
- 39: outer gear
- 40: gear chamber
- 41: side cover
- 42, 43: sealing member
- 48: thrust spherical bearing portion
- 48a: inner ring
- 48b: outer ring
- 49: projection
- 57: radial spherical rolling bearing portion
- 60: thrust spherical rolling bearing portion
- 73: marine thruster device
- 74: driving portion
- 75: marine thruster
- 75a: propeller
- 76a, 76b, 76c: shim
- 77: gap portion
- 78: attaching member
- O: intersection point (center position)
- S: vertical axial line

## Claims

1. A flexible coupling structure comprising a gear coupling structure, wherein: a radial spherical bearing portion is incorporated in the gear coupling structure such that a rotational center position of the radial spherical bearing portion coincides with a crowning center position of an outer gear; an inner gear or the outer gear is supported by the radial spherical bearing portion; and the outer gear is able to incline relatively with respect to the inner gear based on the crowning center position.

2. The flexible coupling structure according to claim 1, wherein: a thrust spherical bearing portion is further incorporated in the gear coupling structure such that a rotational center position of the thrust spherical bearing portion coincide with the crowning center position of the outer gear; and the inner gear or the outer gear is supported by the radial spherical bearing portion and the thrust spherical bearing portion.

3. The flexible coupling structure according to claim 2, wherein:
the gear coupling structure is a vertical axis type and includes a driving tubular portion to which a driving shaft is coupled, a driven tubular portion to which a driven shaft is coupled, and a connecting shaft configured to transmit rotation of the driving tubular portion coupled to the driving shaft to the driven tubular portion coupled to the driven shaft; and
the thrust spherical bearing portion is incorporated in the driving tubular portion located on an upper side or the driven tubular portion located on a lower side.

4. The flexible coupling structure according to claim 2, wherein: the gear coupling structure is a vertical axis type; the thrust spherical bearing portion is provided above or below the radial spherical bearing portion; and the thrust spherical bearing portion and the radial spherical bearing portion are incorporated in a bearing supporting portion such that the thrust spherical bearing portion is located on a far side of the radial spherical bearing portion.

5. The flexible coupling structure according to claim 1, wherein:
the radial spherical bearing portion is high in load force; and
a load in a radial direction and thrust direction is supported by the radial spherical bearing portion without providing a thrust spherical bearing portion.

6. The flexible coupling structure according to claim 2, wherein one or each of the radial spherical bearing portion and the thrust spherical bearing portion is a spherical slide bearing portion or a spherical rolling bearing portion.

7. The flexible coupling structure according to claim 1 or 6, wherein:
the gear coupling structure includes a driving tubular portion to which a driving shaft is coupled, a driven tubular portion to which a driven shaft is coupled, and a connecting shaft configured to transmit rotation of the driving tubular portion coupled to the driving shaft to the driven tubular portion coupled to the driven shaft; and
a bearing supporting shaft to which the radial spherical bearing portion is attached is attached to any one of a side where the connecting shaft is provided, a side where the driving tubular portion is provided, a side where the driven tubular portion is provided, the driving shaft, and the driven shaft.

8. The flexible coupling structure according to claim 2 or 6, wherein:
the gear coupling structure includes a driving tubular portion to which a driving shaft is coupled, a driven tubular portion to which a driven shaft is coupled, and a connecting shaft configured to transmit rotation of the driving tubular portion coupled to the driving shaft to the driven tubular portion coupled to the driven shaft; and
a bearing supporting shaft to which the radial spherical bearing portion and the thrust spherical bearing portion are attached is attached to any one of a side where the connecting shaft is provided, a side where the driving tubular portion is provided, a side where the driven tubular portion is provided, the driving shaft, and the driven shaft.

9. The flexible coupling structure according to claim 1 or 6, wherein:
the gear coupling structure includes a driving tubular portion to which a driving shaft is coupled, a driven tubular portion to which a driven shaft is coupled, and a connecting shaft configured to transmit rotation of the driving tubular portion coupled to the driving shaft to the driven tubular portion coupled to the driven shaft; and
a bearing supporting portion having an inner side to which the radial spherical bearing portion is attached is attached to any one of a side where the connecting shaft is provided, a side where the driving tubular portion is provided, a side where the driven tubular portion is provided, the driving shaft, and the driven shaft.

10. The flexible coupling structure according to claim 2 or 6, wherein:
the gear coupling structure includes a driving tubular portion to which a driving shaft is coupled, a driven tubular portion to which a driven shaft is coupled, and a connecting shaft configured to transmit rotation of the driving tubular portion coupled to the driving shaft to the driven tubular portion coupled to the driven shaft; and
a bearing supporting portion having an inner side to which the radial spherical bearing portion and the thrust spherical bearing portion are attached is attached to any one of a side where the connecting shaft is provided, a side where the driving tubular portion is provided, a side where the driven tubular portion is provided, the driving shaft, and the driven shaft.

11. The flexible coupling structure according to claim 1 or 2, wherein: an engaging gear portion including the outer gear and the inner gear is sectioned by a lid portion as a gear chamber; the gear chamber is filled with lubricating oil and sealed by the lid portion; and the lid portion is integral with a bearing supporting shaft.

12. The flexible coupling structure according to claim 1 or 2, wherein: an engaging gear portion including the outer gear and the inner gear is sectioned by a lid portion as a gear chamber; the gear chamber is filled with lubricating oil and sealed by the lid portion; and the lid portion supports at least the radial spherical bearing portion.

13. The flexible coupling structure according to claim 1 or 2, wherein:
the gear coupling structure includes a driving tubular portion to which a driving shaft is coupled, a driven tubular portion to which a driven shaft is coupled, and a connecting shaft configured to transmit rotation of the driving tubular portion coupled to the driving shaft to the driven tubular portion coupled to the driven shaft; and
the connecting shaft is divided into a shaft main body portion and a divided end portion on which an inner gear is formed, and the shaft main body portion and the divided end portion are integral with each other with joint bolts including a reamer bolt.

14. The flexible coupling structure according to claim 1 or 2, wherein:
the gear coupling structure includes a driving tubular portion to which a driving shaft is coupled, a driven tubular portion to which a driven shaft is coupled, and a connecting shaft configured to transmit rotation of the driving tubular portion coupled to the driving shaft to the driven tubular portion coupled to the driven shaft; and
the outer gear or the inner gear is formed on the driving tubular portion and the driven tubular portion, and the inner gear or the outer gear is formed on the connecting shaft.

15. A marine thruster device comprising: the flexible coupling structure according to claim 1, wherein rotation of a driving portion is transmitted through the flexible coupling structure to an input shaft of a marine thruster.
